# EUROPEAN PATENT SPECIFICATION

(11) **EP 3 719 382 B1**
(45) Date of publication and mention of the grant of the patent: **01.03.2023**
(21) Application number: 19305440.0
(22) Date of filing: 03.04.2019
(51) Int. Cl.: F17C 7/00

(54) **VEHICLE FUEL PRESSURE REGULATOR WARM-UP BY A TRANSPORTATION REFRIGERATION UNIT REFRIGERANT**
AUFWÄRMEN DES KRAFTSTOFFDRUCKREGLERS EINES FAHRZEUGS DURCH EIN KÄLTEMITTEL EINER TRANSPORTKÄLTEEINHEIT
RÉCHAUFFEMENT DE RÉGULATEUR DE PRESSION DE CARBURANT POUR VÉHICULE À L'AIDE D'UN RÉFRIGÉRANT D'UNITÉ DE RÉFRIGÉRATION DE TRANSPORT

(43) Date of publication of application: 07.10.2020
(73) Proprietor: Carrier Corporation, Palm Beach Gardens, FL 33418 (US)
(72) Inventor: Renault, Loic, 76520 Franqueville Saint Pierre (FR)
(74) Representative: Dehns

(56) References cited:
- WO-A1-2017/095843
- WO-A1-2017/172855
- WO-A1-2017/208044
- WO-A2-2017/100590
- US-A1- 2011 247 350

## Description

The subject matter disclosed herein generally relates to transportation refrigeration units, and more specifically to an apparatus and a method for powering an associated vehicle of a transportation refrigeration unit.

Traditional refrigerated cargo trucks or refrigerated tractor trailers, such as those utilized to transport cargo via sea, rail, or road, is a truck, trailer or cargo container, generally defining a cargo compartment, and modified to include a refrigeration system located at one end of the truck, trailer, or cargo container. Refrigeration systems typically include a compressor, a condenser, an expansion valve, and an evaporator serially connected by refrigerant lines in a closed refrigerant circuit in accord with known refrigerant vapor compression cycles. A power unit, such as a combustion engine, drives the compressor of the refrigeration unit, and may be diesel powered, natural gas powered, or other type of engine. In many tractor trailer transport refrigeration systems, the compressor is driven by the engine shaft either through a belt drive or by a mechanical shaft-to-shaft link.

Refrigerated vehicles may be powered by a natural gas engine, the natural gas must be compressed and stored in high pressure containers to fit aboard refrigerated vehicles. The compressed natural gas must be then decompressed to be consumed by the natural gas engine. The natural gas is typically decompressed through a series of regulators but this decompression process is inefficient.
WO 2017/208044 A1 discloses a fuel system of a transport refrigeration system.

According to one aspect, the present invention provides a transportation refrigeration unit, the transportation refrigeration unit comprising: a condenser; characterised in that the transport refrigeration unit further comprises: a fuel heat exchanger fluidly connected to the condenser, the fuel heat exchanger configured to receive refrigerant from the condenser; and a fuel decompression device located in a fuel line fluidly connecting a fuel tank and an engine, the fuel decompression device being in thermal communication with the fuel heat exchanger.

Optionally, the fuel decompression device is located within the fuel heat exchanger.

Optionally, the fuel decompression device is configured to reduce a fuel pressure of the compressed fuel of the fuel tank from a first pressure to a second pressure.

Optionally, the fuel line further includes: a first fuel line fluidly connecting the fuel decompression device to the fuel tank; and a second fuel line fluidly connecting the fuel decompression device to the engine.

Optionally, an evaporator is fluidly connected to the fuel heat exchanger, the evaporator being configured to receive refrigerant from fuel the heat exchanger.

Optionally, the fuel is natural gas.

Optionally, the engine is a vehicle engine.

Optionally, the engine is a transportation refrigeration unit engine.

According to another aspect, the present invention provides a transport refrigeration system, comprising: an engine; a fuel tank configured to store compressed fuel for the engine, the fuel tank being fluidly connected to the engine through a fuel line; and a transportation refrigeration unit as discussed above.

According to another aspect, the present invention provides a method of powering an engine, the method comprising: storing fuel within a fuel tank, the fuel being compressed within the fuel tank; and conveying the fuel from the fuel tank to the engine through a fuel line; characterised by: decompressing the fuel within the fuel line using a fuel decompression device located in the fuel line; and heating the fuel within the fuel decompression device using a fuel heat exchanger in thermal communication with the fuel decompression device, the fuel heat exchanger being in fluid communication with a condenser of a transportation refrigeration unit and configured to receive refrigerant from the condenser.

Optionally, the fuel decompression device is located within the fuel heat exchanger.

Optionally, the fuel is natural gas.

Optionally, the engine is a transportation refrigeration unit engine.

Technical effects of embodiments of the present disclosure include warming decompressing fuel for transportation refrigeration unit engine or a vehicle engine using refrigerant from a condenser of a refrigeration unit.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The subject matter which is regarded as the disclosure is particularly pointed out and distinctly claimed in the claims at the conclusion of the specification. The foregoing and other features and advantages of the disclosure are apparent from the following description of example embodiments taken in conjunction with the accompanying drawings in which:
FIG. 1 is a perspective view of a transportation refrigeration system having an transportation refrigeration unit;
FIG. 2 is a schematic of the transportation refrigeration unit and vehicle engine;
FIG. 3 is a schematic of the transportation refrigeration unit and transportation refrigeration unit engine; and
FIG. 4 is a flow diagram illustrating a method of fueling an engine.

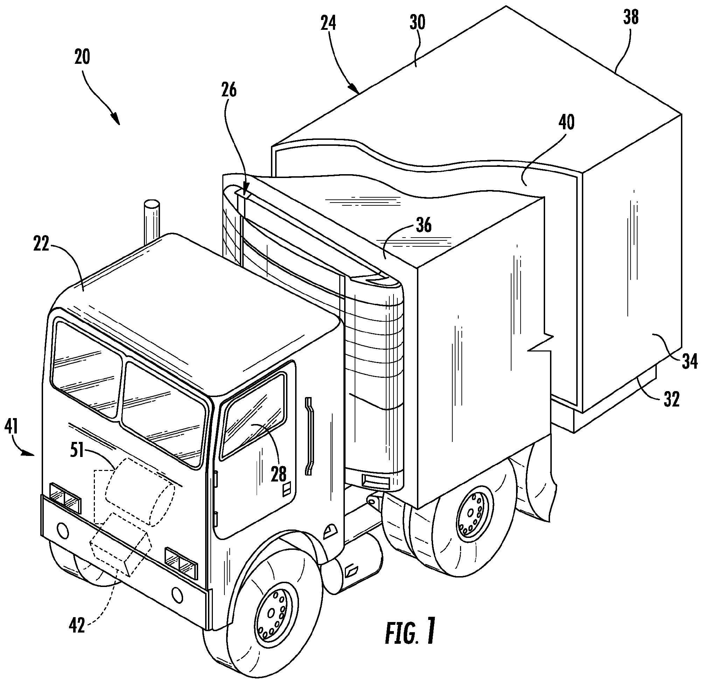

Referring to FIG. 1, a transport refrigeration system 20 is illustrated. In the illustrated embodiment, the transport refrigeration systems 20 may include a tractor or vehicle 22, a container 24, and a transportation refrigeration unit (TRU) 26. The container 24 may be pulled by a vehicle 22. It is understood that embodiments described herein may be applied to shipping containers that are shipped by rail, sea, air, or any other suitable container, thus the vehicle may be a truck, train, boat, airplane, helicopter, etc.

The vehicle 22 may include an operator's compartment or cab 28 and a vehicle engine 42, which is part of a vehicle fuel system 41 of the vehicle 22. The vehicle 22 may be driven by a driver located within the cab, driven by a driver remotely, driven autonomously, driven semi-autonomously, or any combination thereof. The vehicle engine 42 may be a combustion engine powered by a compressed fuel, such as, for example, compressed natural gas. The vehicle engine 42 may also be part of the power train or drive system 22 of the trailer system (i.e., container 24), thus the vehicle engine is configured to propel the wheels of the vehicle 22 and/or the wheels of the container 24. The vehicle engine 42 may be mechanically connected to the wheels of the vehicle 22 and/or the wheels of the container 24. A fuel tank 51 is fluidly connected to the vehicle engine 42 as part of a vehicle fuel system 41. It is understood that the vehicle fuel system 41 is illustrated in FIG. 1 as only comprising a vehicle engine 42 and fuel tank 51 for simplification, the vehicle fuel system 41 may have additional components not illustrated in FIG. 1. The fuel tank 51 is configured to provide fuel to power the vehicle engine 42.

The container 24 may be coupled to the vehicle 22 and is thus pulled or propelled to desired destinations. The container 24 may include a top wall 30, a bottom wall 32 opposed to and spaced from the top wall 30, two side walls 34 spaced from and opposed to one-another, and opposing front and rear walls 36, 38 with the front wall 36 being closest to the vehicle 22. The container 24 may further include doors (not shown) at the rear wall 38, or any other wall. The walls 30, 32, 34, 36, 38 together define the boundaries of a refrigerated cargo space 40. Typically, transport refrigeration systems 20 are used to transport and distribute cargo, such as, for example perishable goods and environmentally sensitive goods (herein referred to as perishable goods). The perishable goods may include but are not limited to fruits, vegetables, grains, beans, nuts, eggs, dairy, seed, flowers, meat, poultry, fish, ice, blood, pharmaceuticals, or any other suitable cargo requiring cold chain transport. In the illustrated embodiment, the TRU 26 is associated with a container 24 to provide desired environmental parameters, such as, for example temperature, pressure, humidity, carbon dioxide, ethylene, ozone, light exposure, vibration exposure, and other conditions to the refrigerated cargo space 40. In further embodiments, the TRU 26 is a refrigeration system capable of providing a desired temperature and humidity range.

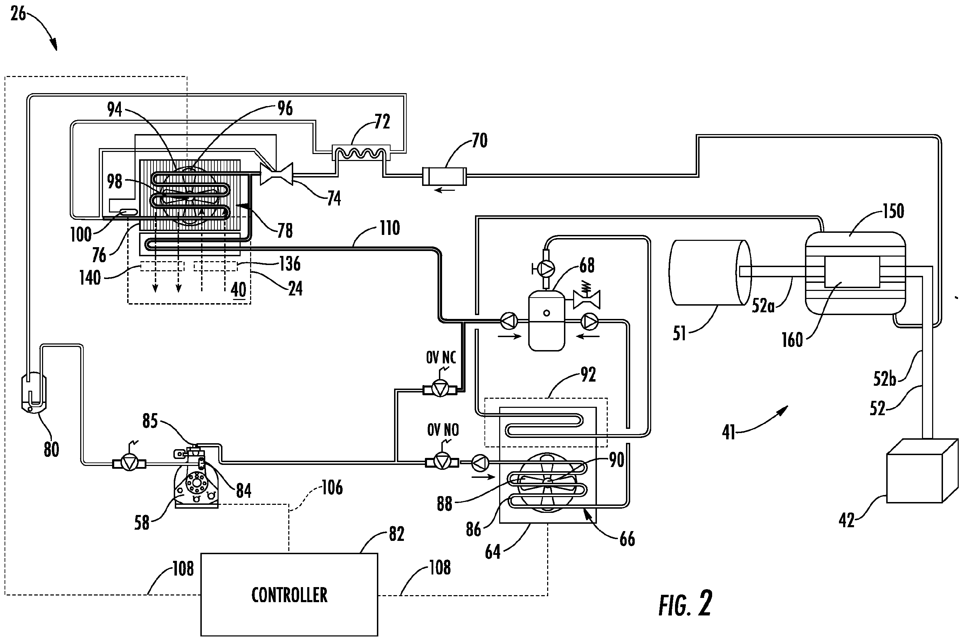

Referring to FIGs. 1 and 2, the container 24 is generally constructed to store a perishable good (not shown) in the refrigerated cargo space 40. The TRU 26 is in operative association with the refrigerated cargo space 40. The TRU 26 is generally integrated into the container 24 and may be mounted to the front wall 36. The cargo is maintained at a desired temperature by cooling of the refrigerated cargo space 40 via the TRU 26 that circulates refrigerated airflow into and through the refrigerated cargo space 40 of the container 24. It is further contemplated and understood that the TRU 26 may be applied to any transport compartments (e.g., shipping or transport containers) and not necessarily those used in tractor trailer systems. Furthermore, the container 24 may be a part of the of the vehicle 22 or constructed to be removed from a framework and wheels (not shown) of the vehicle 22 for alternative shipping means (e.g., marine, railroad, flight, and others).

The components of the TRU 26 may include a compressor 58, a condenser 64 that may be air cooled, a condenser fan assembly 66, a receiver 68, a filter dryer 70, a heat exchanger 72, an expansion valve 74, an evaporator 76, an evaporator fan assembly 78, a suction modulation valve 80, and a controller 82 that may include a computer-based processor (e.g., microprocessor) and the like as will be described further herein. Operation of the TRU 26 may best be understood by starting at the compressor 58, where the suction gas (e.g., natural refrigerant, hydrofluorocarbon (HFC) R-404a, HFC R-134a...etc) enters the compressor 58 at a suction port 84 and is compressed to a higher temperature and pressure. The refrigerant gas is emitted from the compressor 58 at an outlet port 85 and may then flow into tube(s) 86 of the condenser 64.

Air flowing across a plurality of condenser coil fins (not shown) and the tubes 86, cools the gas to its saturation temperature. The airflow across the condenser 64 may be facilitated by one or more fans 88 of the condenser fan assembly 66. The condenser fans 88 may be driven by respective condenser fan motors 90 of the fan assembly 66 that may be electric. By removing latent heat, the refrigerant gas within the tubes 86 condenses to a high pressure and high temperature liquid and flows to the receiver 68 that provides storage for excess liquid refrigerant during low temperature operation.

From the receiver 68, the liquid refrigerant may pass through a sub-cooler heat exchanger 92 of the condenser 64 and then through a fuel heat exchanger 150. The fuel heat exchanger 150 is in thermal communication with a fuel line 52 of the vehicle fuel system 41. The fuel line 52 may be composed of a first fuel line 52a and a second fuel line 52b. The first fuel line 52a may fluidly connect the fuel tank 51 to a fuel decompression device 160 and the second fuel line 52b may fluidly connect the fuel decompression device 160 to the vehicle engine 42. The fuel decompression device 160 may be configured to decompress the fuel from a first pressure to a second pressure. The first pressure being greater than the second pressure. The first pressure may be a fuel pressure required to store the fuel within the fuel tank 51. The first pressure may be about 20 MPa. The second pressure may be a fuel pressure required to consume the fuel within the vehicle engine 42. The second pressure may be about 1 MPa. The fuel decompression device 160 may be a regulator, valve, turbine, or other device(s) capable of decompressing the fuel from the first pressure to the second pressure.

The fuel decompression device 160 is in thermal communication with the fuel heat exchanger 150, such that the fuel decompression device 160 may absorb heat from the fuel heat exchanger 150. Heat is released during the compression process of fuel (e.g., natural gas), while conversely heat is absorbed during the decompression process. The decompression process occurring within the fuel decompression device 160 absorbs heat, thus reducing the temperature of the fuel decompression device 160. The fuel heat exchanger 150 allows refrigerant from the sub-cooler heat exchanger 92 to be in thermal communication with the fuel decompression device 160. The refrigerant from the sub-cooler heat exchanger 92 is at an elevated temperature in comparison to the temperature of the fuel decompression device 160 when fuel is being decompressed, thus heat may flow from the refrigerant from the sub-cooler heat exchanger 92 within the fuel heat exchanger 150 to the fuel decompression device 160, thus warming up the fuel decompression device 160 and the fuel within the fuel decompression device 160.

The fuel heat exchanger 150 may have a variety of different configurations to place the refrigerant from the sub-cooler heat exchanger 92 within the fuel heat exchanger 150 in thermal communication with the fuel decompression device 160 and the fuel within the fuel decompression device 160. The fuel heat exchanger 150 may be a shell and tube heat exchanger. In one example, the fuel decompression device 160 may be located within the fuel heat exchanger 150 and the refrigerant from the sub-cooler heat exchanger 92 may flow around the fuel decompression device 160 within the fuel heat exchanger 150. In one example, the refrigerant from the sub-cooler heat exchanger 92 may flow through tubes in thermal communication with the fuel decompression device 160. The fuel decompression device 160 may further include fins or other devices to increase the heat-transfer area of the fuel decompression device 160.

From the fuel heat exchanger 150, the liquid refrigerant may pass through the filter-dryer 70 that keeps the refrigerant clean and dry, then to the heat exchanger 72 that increases the refrigerant sub-cooling, and finally to the expansion valve 74.

As the liquid refrigerant passes through the orifices of the expansion valve 74, some of the liquid vaporizes into a gas (i.e., flash gas). Return air from the refrigerated space (i.e., cargo refrigerated cargo space 40) flows over the heat transfer surface of the evaporator 76. As the refrigerant flows through a plurality of tubes 94 of the evaporator 76, the remaining liquid refrigerant absorbs heat from the return air, and in so doing, is vaporized and thereby cools the return air.

The evaporator fan assembly 78 includes one or more evaporator fans 96 that may be driven by respective fan motors 98 that may be electric. The airflow across the evaporator 76 is facilitated by the evaporator fans 96. From the evaporator 76, the refrigerant, in vapor form, may then flow through the suction modulation valve 80, and back to the compressor 58. The expansion valve 74 may be thermostatic or electrically adjustable. In an embodiment, as depicted, the expansion valve 74 is thermostatic. A thermostatic expansion valve bulb sensor 100 may be located proximate to an outlet of the evaporator tube 94. The bulb sensor 100 is intended to control the thermostatic expansion valve 74, thereby controlling refrigerant superheat at an outlet of the evaporator tube 94. The thermostatic expansion valve 74 may be an electronic expansion valve is in communication with the TRU controller 82. The TRU controller 82 may position the valve in response to temperature and pressure measurements at the exit of the evaporator 76. It is further contemplated and understood that the above generally describes a single stage vapor compression system that may be used for HFCs such as R-404a and R-134a and natural refrigerants such as propane and ammonia. Other refrigerant systems may also be applied that use carbon dioxide (CO₂) refrigerant, and that may be a two-stage vapor compression system.

A bypass valve (not shown) may facilitate the flash gas of the refrigerant to bypass the evaporator 76. This will allow the evaporator coil to be filled with liquid and completely 'wetted' to improve heat transfer efficiency. With CO₂ refrigerant, this bypass flash gas may be re-introduced into a mid-stage of a two-stage compressor 58.

The compressor 58 may be driven by a combustion engine or electric motor (no shown for clarity). The compressor 58 may be a single compressor. The single compressor may be a two-stage compressor, a scroll-type compressor or other compressors adapted to compress HFCs or natural refrigerants. The natural refrigerant may be CO₂, propane, ammonia, or any other natural refrigerant that may include a global-warming potential (GWP) of about one (1).

Airflow through the TRU 26 and the refrigerated cargo space 40 is illustrated. Airflow is circulated into and through and out of the refrigerated cargo space 40 of the container 24 by means of the TRU 26. A return airflow 134 flows into the TRU 26 from the refrigerated cargo space 40 through a return air intake 136, and across the evaporator 76 via the fan 96, thus conditioning the return airflow 134 to a selected or predetermined temperature. The conditioned return airflow 134, now referred to as supply airflow 138, is supplied into the refrigerated cargo space 40 of the container 24 through the refrigeration unit outlet 140, which in some embodiments is located near the top wall 30 of the container 24. The supply airflow 138 cools the perishable goods in the refrigerated cargo space 40 of the container 24. It is to be appreciated that the TRU 26 can further be operated in reverse to warm the container 24 when, for example, the outside temperature is very low.

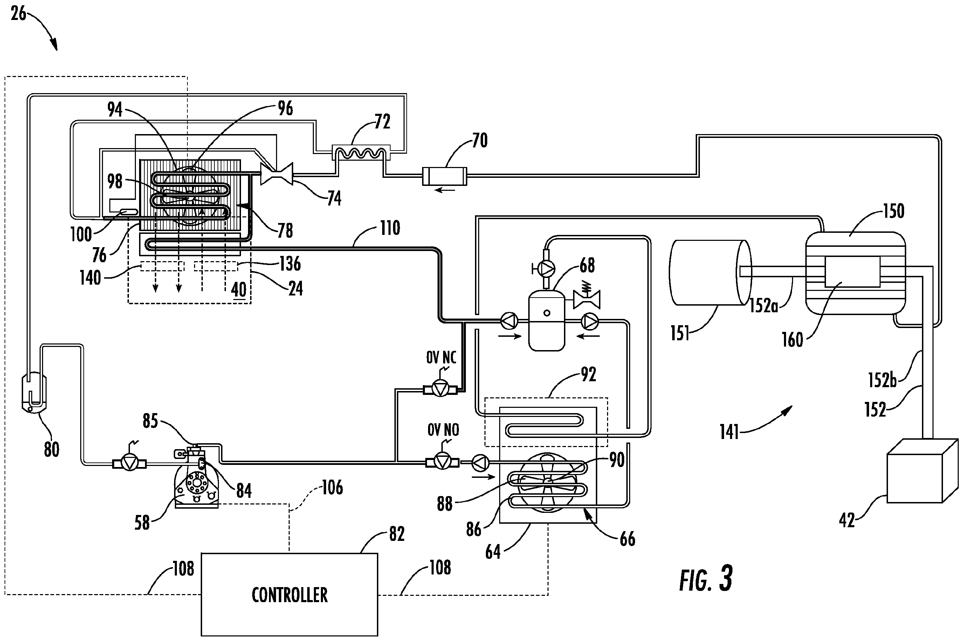

Referring to FIGS. 1 and 3, an engine 150 of the TRU 26 is illustrated. Similar to FIG. 3, refrigerant from the TRU 26 may also be used to transfer heat to the fuel for the transport refrigeration unit (TRU) engine 142 as described herein. The container 24 is generally constructed to store a perishable good (not shown) in the refrigerated cargo space 40. The TRU 26 is in operative association with the refrigerated cargo space 40. The TRU 26 is generally integrated into the container 24 and may be mounted to the front wall 36. The cargo is maintained at a desired temperature by cooling of the refrigerated cargo space 40 via the TRU 26 that circulates refrigerated airflow into and through the refrigerated cargo space 40 of the container 24. It is further contemplated and understood that the TRU 26 may be applied to any transport compartments (e.g., shipping or transport containers) and not necessarily those used in tractor trailer systems. Furthermore, the container 24 may be a part of the of the vehicle 22 or constructed to be removed from a framework and wheels (not shown) of the vehicle 22 for alternative shipping means (e.g., marine, railroad, flight, and others).

The components of the TRU 26 may include a compressor 58, a condenser 64 that may be air cooled, a condenser fan assembly 66, a receiver 68, a filter dryer 70, a heat exchanger 72, an expansion valve 74, an evaporator 76, an evaporator fan assembly 78, a suction modulation valve 80, and a controller 82 that may include a computer-based processor (e.g., microprocessor) and the like as will be described further herein. Operation of the TRU 26 may best be understood by starting at the compressor 58, where the suction gas (e.g., natural refrigerant, hydrofluorocarbon (HFC) R-404a, HFC R-134a...etc) enters the compressor 58 at a suction port 84 and is compressed to a higher temperature and pressure. The refrigerant gas is emitted from the compressor 58 at an outlet port 85 and may then flow into tube(s) 86 of the condenser 64.

Air flowing across a plurality of condenser coil fins (not shown) and the tubes 86, cools the gas to its saturation temperature. The airflow across the condenser 64 may be facilitated by one or more fans 88 of the condenser fan assembly 66. The condenser fans 88 may be driven by respective condenser fan motors 90 of the fan assembly 66 that may be electric. By removing latent heat, the refrigerant gas within the tubes 86 condenses to a high pressure and high temperature liquid and flows to the receiver 68 that provides storage for excess liquid refrigerant during low temperature operation.

From the receiver 68, the liquid refrigerant may pass through a sub-cooler heat exchanger 92 of the condenser 64 and then through a fuel heat exchanger 150. The fuel heat exchanger 150 is in thermal communication with a fuel line 152 of a transportation refrigeration unit fuel system 141. The fuel line 152 may be composed of a first fuel line 152a and a second fuel line 152b. The first fuel line 152a may fluidly connect the fuel tank 151 to a fuel decompression device 160 and the second fuel line 152b may fluidly connect the fuel decompression device 160 to the TRU engine 142. The fuel decompression device 160 may be configured to decompress the fuel from a first pressure to a second pressure. The first pressure being greater than the second pressure. The first pressure may be a fuel pressure required to store the fuel within the fuel tank 151. In an embodiment, the first pressure may be about 20 MPa. The second pressure may be a fuel pressure required to consume the fuel within the TRU engine 142. In an embodiment, the second pressure may be about 1 MPa. The fuel decompression device 160 may be a regulator, valve, turbine, or other device(s) capable of decompressing the fuel from the first pressure to the second pressure.

The fuel decompression device 160 is in thermal communication with the fuel heat exchanger 150, such that the fuel decompression device 160 may absorb heat from the fuel heat exchanger 150. Heat is released during the compression process of fuel (e.g., natural gas), while conversely heat is absorbed during the decompression process. The decompression process occurring within the fuel decompression device 160 absorbs heat, thus reducing the temperature of the fuel decompression device 160. The fuel heat exchanger 150 allows refrigerant from the sub-cooler heat exchanger 92 to be in thermal communication with the fuel decompression device 160. The refrigerant from the sub-cooler heat exchanger 92 is at an elevated temperature in comparison to the temperature of the fuel decompression device 160 when fuel is being decompressed, thus heat may flow from the refrigerant from the sub-cooler heat exchanger 92 within the fuel heat exchanger 150 to the fuel decompression device 160, thus warming up the fuel decompression device 160 and the fuel within the fuel decompression device 160.

The fuel heat exchanger 150 may have a variety of different configurations to place the refrigerant from the sub-cooler heat exchanger 92 within the fuel heat exchanger 150 in thermal communication with the fuel decompression device 160 and the fuel within the fuel decompression device 160. In an embodiment, the fuel heat exchanger 150 may be a shell and tube heat exchanger. In one example, the fuel decompression device 160 may be located within the fuel heat exchanger 150 and the refrigerant from the sub-cooler heat exchanger 92 may flow around the fuel decompression device 160 within the fuel heat exchanger 150. In one example, the refrigerant from the sub-cooler heat exchanger 92 may flow through tubes in thermal communication with the fuel decompression device 160. The fuel decompression device 160 may further include fins or other devices to increase the heat-transfer area of the fuel decompression device 160.

From the fuel heat exchanger 150, the liquid refrigerant may pass through the filter-dryer 70 that keeps the refrigerant clean and dry, then to the heat exchanger 72 that increases the refrigerant sub-cooling, and finally to the expansion valve 74.

As the liquid refrigerant passes through the orifices of the expansion valve 74, some of the liquid vaporizes into a gas (i.e., flash gas). Return air from the refrigerated space (i.e., cargo refrigerated cargo space 40) flows over the heat transfer surface of the evaporator 76. As the refrigerant flows through a plurality of tubes 94 of the evaporator 76, the remaining liquid refrigerant absorbs heat from the return air, and in so doing, is vaporized and thereby cools the return air.

The evaporator fan assembly 78 includes one or more evaporator fans 96 that may be driven by respective fan motors 98 that may be electric. The airflow across the evaporator 76 is facilitated by the evaporator fans 96. From the evaporator 76, the refrigerant, in vapor form, may then flow through the suction modulation valve 80, and back to the compressor 58. The expansion valve 74 may be thermostatic or electrically adjustable. In an embodiment, as depicted, the expansion valve 74 is thermostatic. A thermostatic expansion valve bulb sensor 100 may be located proximate to an outlet of the evaporator tube 94. The bulb sensor 100 is intended to control the thermostatic expansion valve 74, thereby controlling refrigerant superheat at an outlet of the evaporator tube 94. The thermostatic expansion valve 74 may be an electronic expansion valve is in communication with the TRU controller 82. The TRU controller 82 may position the valve in response to temperature and pressure measurements at the exit of the evaporator 76. It is further contemplated and understood that the above generally describes a single stage vapor compression system that may be used for HFCs such as R-404a and R-134a and natural refrigerants such as propane and ammonia. Other refrigerant systems may also be applied that use carbon dioxide (CO₂) refrigerant, and that may be a two-stage vapor compression system.

A bypass valve (not shown) may facilitate the flash gas of the refrigerant to bypass the evaporator 76. This will allow the evaporator coil to be filled with liquid and completely 'wetted' to improve heat transfer efficiency. With CO₂ refrigerant, this bypass flash gas may be re-introduced into a mid-stage of a two-stage compressor 58.

The compressor 58 may be driven by a TRU engine 142, a physical connection between the TRU engine 142 and the compressor 58 is not shown for clarity. The TRU engine 142 may be a combustion engine. The compressor 58 may be a single compressor. The single compressor may be a two-stage compressor, a scroll-type compressor or other compressors adapted to compress HFCs or natural refrigerants. The natural refrigerant may be CO₂, propane, ammonia, or any other natural refrigerant that may include a global-warming potential (GWP) of about one (1).

Airflow through the TRU 26 and the refrigerated cargo space 40 is illustrated. Airflow is circulated into and through and out of the refrigerated cargo space 40 of the container 24 by means of the TRU 26. A return airflow 134 flows into the TRU 26 from the refrigerated cargo space 40 through a return air intake 136, and across the evaporator 76 via the fan 96, thus conditioning the return airflow 134 to a selected or predetermined temperature. The conditioned return airflow 134, now referred to as supply airflow 138, is supplied into the refrigerated cargo space 40 of the container 24 through the refrigeration unit outlet 140, which in some embodiments is located near the top wall 30 of the container 24. The supply airflow 138 cools the perishable goods in the refrigerated cargo space 40 of the container 24. It is to be appreciated that the TRU 26 can further be operated in reverse to warm the container 24 when, for example, the outside temperature is very low.

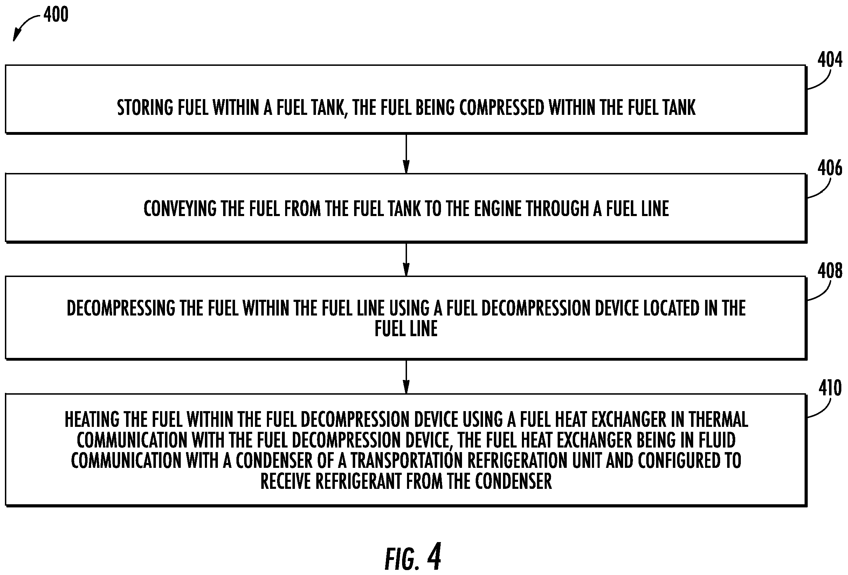

Referring now to FIG. 4, while referencing components of FIGs. 1-3. FIG. 4 shows a flow chart of method 400 of powering an engine 42. In one embodiment, the engine may be at least one of the vehicle engine 42 and the TRU engine 142. At block 404, fuel is stored within a fuel tank. In an embodiment, fuel tank is at least one of the fuel tank 51 of the vehicle engine 42 and the fuel tank 151 of the TRU engine 142. The fuel is compressed within the fuel tank 51. At block 406, the fuel is conveyed from the fuel tank 51 to the engine through a fuel line. In an embodiment, fuel line is at least one of the fuel line 52 of the vehicle engine 42 and the fuel line 152 of the TRU engine 142. At block 408, the fuel is decompressed within the fuel line using a fuel decompression device 160 located in the fuel line. At block 410, the fuel is heated within the fuel decompression device 160 using a fuel heat exchanger 150 in thermal communication with the fuel decompression device 160. The heat exchanger is in fluid communication with a condenser 64 of a transportation refrigeration unit 26 and configured to receive refrigerant from the condenser 26. In an embodiment, the fuel decompression device 160 is located within the fuel heat exchanger 150. In another embodiment, the fuel is natural gas.

While the above description has described the flow process of FIG. 4 in a particular order, it should be appreciated that unless otherwise specifically required in the attached claims that the ordering of the steps may be varied.

As described above, embodiments can be in the form of processorimplemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes a device for practicing the embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" may include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present invention. In addition, many modifications may be made to adapt a particular situation or material to the teachings of the present disclosure without departing from the scope thereof. Therefore, it is intended that the present invention not be limited to the particular embodiment disclosed as the best mode contemplated for carrying out this present disclosure, but that the present invention will include all embodiments falling within the scope of the claims.

## Claims

1. A transportation refrigeration unit (26), the transportation refrigeration unit comprising:
a condenser (64);
**characterised in that** the transport refrigeration unit further comprises:
a fuel heat exchanger (150) fluidly connected to the condenser, the fuel heat exchanger configured to receive refrigerant from the condenser; and
a fuel decompression device (160) located in a fuel line (52) fluidly connecting a fuel tank (51) and an engine (42, 142), the fuel decompression device being in thermal communication with the fuel heat exchanger.

2. The transportation refrigeration unit of claim 1, wherein the fuel decompression device (160) is located within the fuel heat exchanger (150).

3. The transportation refrigeration unit of claim 1 or 2, wherein the fuel decompression device (160) is configured to reduce a fuel pressure of the compressed fuel of the fuel tank (51) from a first pressure to a second pressure.

4. The transportation refrigeration unit of claim 1, 2 or 3, wherein the fuel line (52) further comprises:
a first fuel line (52a) fluidly connecting the fuel decompression device (160) to the fuel tank (51); and
a second fuel line (52b) fluidly connecting the fuel decompression device to the engine (42, 142).

5. The transportation refrigeration unit of any preceding claim, further comprising:
an evaporator (76) fluidly connected to the fuel heat exchanger (150), the evaporator being configured to receive refrigerant from fuel the heat exchanger.

6. The transportation refrigeration unit of any preceding claim, wherein the fuel is natural gas.

7. The transportation refrigeration unit of any preceding claim, wherein the engine is a vehicle engine (42).

8. The transportation refrigeration unit of any preceding claim, wherein the engine is a transportation refrigeration unit engine (142).

9. A transport refrigeration system (20), comprising:
an engine (42, 142);
a fuel tank (51) configured to store compressed fuel for the engine, the fuel tank being fluidly connected to the engine through a fuel line (52); and
a transportation refrigeration unit (26) as claimed in any preceding claim.

10. A method of powering an engine (42, 142), the method comprising:
storing fuel within a fuel tank (51), the fuel being compressed within the fuel tank; and
conveying the fuel from the fuel tank to the engine through a fuel line (52);
**characterised by**:
decompressing the fuel within the fuel line using a fuel decompression device (160) located in the fuel line; and
heating the fuel within the fuel decompression device using a fuel heat exchanger (150) in thermal communication with the fuel decompression device, the fuel heat exchanger being in fluid communication with a condenser (64) of a transportation refrigeration unit (26) and configured to receive refrigerant from the condenser.

11. The method of claim 10, wherein the fuel decompression device (160) is located within the fuel heat exchanger (150).

12. The method of claim 10 or 11, wherein the fuel is natural gas.

13. The method of claim 10, 11 or 12, wherein the engine is a transportation refrigeration unit engine (142).

## Patentansprüche

1. Transportkühlaggregat (26), wobei das Transportkühlaggregat umfasst:
einen Kondensator (64);
**dadurch gekennzeichnet, dass** das Transportkühlaggregat weiter umfasst:
einen Kraftstoffwärmetauscher (150), der fluidisch mit dem Kondensator verbunden ist, wobei der Kraftstoffwärmetauscher konfiguriert ist, um Kältemittel von dem Kondensator aufzunehmen; und
eine Kraftstoffdekompressionsvorrichtung (160), die in einer Kraftstoffleitung (52) angeordnet ist, die einen Kraftstofftank (51) und einen Motor (42, 142) fluidisch miteinander verbindet, wobei die Kraftstoffdekompressionsvorrichtung in thermischer Verbindung mit dem Kraftstoffwärmetauscher steht.

2. Transportkühlaggregat nach Anspruch 1, wobei die Kraftstoffdekompressionsvorrichtung (160) im Inneren des Kraftstoffwärmetauschers (150) angeordnet ist.

3. Transportkühlaggregat nach Anspruch 1 oder 2, wobei die Kraftstoffdekompressionsvorrichtung (160) konfiguriert ist, um einen Kraftstoffdruck des komprimierten Kraftstoffs des Kraftstofftanks (51) von einem ersten Druck auf einen zweiten Druck zu mindern.

4. Transportkühlaggregat nach Anspruch 1, 2 oder 3, wobei die Kraftstoffleitung (52) weiter umfasst:
eine erste Kraftstoffleitung (52a), die die Kraftstoffdekompressionsvorrichtung (160) fluidisch mit dem Kraftstofftank (51) verbindet; und
eine zweite Kraftstoffleitung (52b), die die Kraftstoffdekompressionsvorrichtung fluidisch mit dem Motor (42, 142) verbindet.

5. Transportkühlaggregat nach einem der vorstehenden Ansprüche, weiter umfassend:
einen Verdampfer (76), der fluidisch mit dem Kraftstoffwärmetauscher (150) verbunden ist, wobei der Verdampfer konfiguriert ist, um Kältemittel von dem Kraftstoffwärmetauscher aufzunehmen.

6. Transportkühlaggregat nach einem der vorstehenden Ansprüche, wobei der Kraftstoff Erdgas ist.

7. Transportkühlaggregat nach einem der vorstehenden Ansprüche, wobei der Motor ein Fahrzeugmotor (42) ist.

8. Transportkühlaggregat nach einem der vorstehenden Ansprüche, wobei der Motor ein Transportkühlaggregatmotor (142) ist.

9. Transportkühlsystem (20), umfassend:
einen Motor (42, 142);
einen Kraftstofftank (51), der konfiguriert ist, komprimierten Kraftstoff für den Motor zu speichern, wobei der Kraftstofftank über eine Kraftstoffleitung fluidisch (52) mit dem Motor verbunden ist; und
ein Transportkühlaggregat (26) nach einem der vorstehenden Ansprüche.

10. Verfahren zum Antreiben eines Motors (42, 142), wobei das Verfahren umfasst:
Speichern von Kraftstoff in einem Kraftstofftank (51), wobei der Kraftstoff im Inneren des Kraftstofftanks komprimiert wird; und
Fördern des Kraftstoffs vom Kraftstofftank zum Motor über eine Kraftstoffleitung (52);
**gekennzeichnet durch**:
Dekomprimieren des Kraftstoffs im Inneren der Kraftstoffleitung unter Verwendung einer in der Kraftstoffleitung angeordneten Kraftstoffdekompressionsvorrichtung (160); und
Erwärmen des Kraftstoffs im Inneren der Kraftstoffdekompressionsvorrichtung unter Verwendung eines Kraftstoffwärmetauschers (150), der in thermischer Verbindung mit der Kraftstoffdekompressionsvorrichtung steht, wobei der Kraftstoffwärmetauscher in Fluidverbindung mit einem Kondensator (64) eines Transportkühlaggregats (26) steht und konfiguriert ist, um Kältemittel von dem Kondensator aufzunehmen.

11. Verfahren nach Anspruch 10, wobei die Kraftstoffdekompressionsvorrichtung (160) im Inneren des Kraftstoffwärmetauschers (150) angeordnet ist.

12. Verfahren nach Anspruch 10 oder 11, wobei der Kraftstoff Erdgas ist.

13. Verfahren nach Anspruch 10, 11 oder 12, wobei der Motor ein Transportkühlaggregatmotor (142) ist.

## Revendications

1. Unité de réfrigération de transport (26), l'unité de réfrigération de transport comprenant :
un condenseur(64) ;
**caractérisé en ce que** l'unité de réfrigération de transport comprend en outre :
un échangeur de chaleur de carburant (150) relié de manière fluide au condenseur, l'échangeur de chaleur de carburant étant configuré pour recevoir du réfrigérant du condenseur ; et
un dispositif de décompression de carburant (160) situé dans une conduite de carburant (52) reliant de manière fluide un réservoir de carburant (51) et un moteur (42, 142), le dispositif de décompression de carburant étant en communication thermique avec l'échangeur de chaleur de carburant.

2. Unité de réfrigération de transport selon la revendication 1, dans laquelle le dispositif de décompression de carburant (160) est situé dans l'échangeur de chaleur de carburant (150).

3. Unité de réfrigération de transport selon la revendication 1 ou 2, dans laquelle le dispositif de décompression de carburant (160) est configuré pour réduire une pression de carburant du carburant compressé du réservoir de carburant (51) depuis une première pression à une seconde pression.

4. Unité de réfrigération de transport selon la revendication 1, 2 ou 3, dans laquelle la conduite carburant (52) comprend en outre :
une première conduite de carburant (52a) reliant de manière fluide le dispositif de décompression de carburant (160) au réservoir de carburant (51) ; et
une seconde conduite de carburant (52b) reliant de manière fluide le dispositif de décompression de carburant au moteur (42, 142).

5. Unité de réfrigération de transport selon une quelconque revendication précédente, comprenant en outre :
un évaporateur (76) relié de manière fluide à l'échangeur de chaleur de carburant (150), l'évaporateur étant configuré pour recevoir du réfrigérant du carburant l'échangeur de chaleur.

6. Unité de réfrigération de transport selon une quelconque revendication précédente, dans laquelle le carburant est du gaz naturel.

7. Unité de réfrigération de transport selon une quelconque revendication précédente, dans laquelle le moteur est un moteur de véhicule (42).

8. Unité de réfrigération de transport selon une quelconque revendication précédente, dans laquelle le moteur est un moteur d'unité de réfrigération de transport (142).

9. Système de réfrigération de transport (20), comprenant :
un moteur (42, 142) ;
un réservoir de carburant (51) configuré pour stocker du carburant compressé pour le moteur, le réservoir de carburant étant relié de manière fluide au moteur à travers une conduite de carburant (52) ; et
une unité de réfrigération de transport (26) selon l'une quelconque des revendications précédentes.

10. Procédé d'alimentation d'un moteur (42, 142), le procédé comprenant les étapes consistant à :
stocker du carburant dans un réservoir de carburant (51), le carburant étant compressé dans le réservoir de carburant ; et
transporter du carburant du réservoir de carburant au moteur à travers une conduite de carburant (52) ;
**caractérisé par** les étapes consistant à :
décompresser le carburant dans la conduite de carburant en utilisant un dispositif de décompression de carburant (160) situé dans la conduite de carburant ; et
chauffer le carburant dans le dispositif de décompression de carburant en utilisant un échangeur de chaleur de carburant (150) en communication thermique avec le dispositif de décompression de carburant, l'échangeur de chaleur de carburant étant en communication de fluide avec un condenseur (64) d'une unité de réfrigération de transport (26) et configuré pour recevoir du réfrigérant du condenseur.

11. Procédé selon la revendication 10, dans lequel le dispositif de décompression de carburant (160) est situé dans l'échangeur de chaleur de carburant (150).

12. Procédé selon la revendication 10 ou 11, dans lequel le carburant est du gaz naturel.

13. Procédé selon la revendication 10, 11 ou 12, dans lequel le moteur est un moteur d'unité de réfrigération de transport (142).
